# EUROPÄISCHE PATENTSCHRIFT

(11) **EP 0 924 442 B1**
(45) Veröffentlichungstag und Bekanntmachung des Hinweises auf die Patenterteilung: **21.01.2004**
(21) Anmeldenummer: 98122270.6
(22) Anmeldetag: 24.11.1998
(51) Int. Cl.: F16C 33/74

(54) **Lagerbuchse und Verfahren zu ihrer Herstellung**
Bearing bush and method of its production
Coussinet et procédé de sa fabrication

(30) Priorität: 20.12.1997 DE 19757021
(43) Veröffentlichungstag der Anmeldung: 23.06.1999
(73) Patentinhaber: Federal-Mogul Wiesbaden GmbH & Co.KG, 65201 Wiesbaden (DE)
(72) Erfinder: Damour, Philippe, 60489 Frankfurt (DE); Kirchhof, Klaus, 65527 Niedernhausen (DE)

(56) Entgegenhaltungen:
- DE-A- 2 207 308
- DE-A- 4 340 373
- DE-C- 4 401 526
- DE-U- 6 942 955
- FR-A- 1 342 063

## Beschreibung

Die Erfindung betrifft eine Lagerbuchse mit mindestens einer innenliegenden Ringnut an mindestens einem Buchsenende zur Aufnahme eines Dichtringes sowie ein Verfahren zur Herstellung einer solchen Lagerbuchse.

Lagerbuchsen finden vielfältige Anwendung, z.B. in Türscharnieren, als Rollenlagerung, Pedal- und Kupplungslager, usw.. An ihrer Innenseite kann die Lagerbuchse mit einem Lagermaterial beschichtet sein, das gute Gleiteigenschaften und geringen Verschleiß aufweist.

Gleiteigenschaften und Verschleiß können jedoch durch das Eindringen von Fremdstoffen in die Lagerstelle erheblich beeinträchtigt werden. Schmutz, Feuchtigkeit und Abriebpartikel benachbarter Bauteile haben einen unmittelbaren Einfluß auf die Lagerfunktion der Buchse, so daß diese u.U. nach kurzer Betriebszeit ausgetauscht werden muß, wenn keine besonderen Vorkehrungen getroffen werden.

Bei geschmierten Lagerbuchsen kann zudem das Schmiermittel aus der Buchse austreten, wodurch ebenfalls die Gleiteigenschaften mit der Zeit nachlassen.

Um hier Abhilfe zu schaffen, wurden bereits Buchsen entwickelt (vergl. insbes. DE 69 42 955 U), die an einem oder beiden Enden eine eingefräste Nut aufweisen, in die ein speziell geformter, meist stufig ausgebildeter Dichtring eingelegt wird, um das Eindringen von Schmutz und dergleichen in die Lagerstelle zu verhindern. Der Nachteil solcher Buchsen besteht darin, daß eine bestimmte Mindestdicke vorhanden sein muß, um eine solche Aufnahmenut für ein Dichtelement einfräsen zu können. Dieser Vorgang ist aufwendig und teuer. Durch Fräsen hergestellte Nuten weisen außerdem einen rechteckigen Querschnitt auf, so daß speziell geformte Dichtringe benötigt werden, die in die gefrästen Nuten passen.

Aufgabe der Erfindung ist daher eine Lagerbuchse, die unabhängig von der üblichen dünnen Wandstärke mit einer Innennut versehen werden kann, in die ein herkömmliches Dichtelement eingelegt und gehalten werden kann. Es ist auch Aufgabe der Erfindung ein entsprechendes Herstellungsverfahren bereitzustellen.

Diese Aufgabe wird mit einer Lagerbuchse gelöst, bei der die Nut in Axialrichtung der Buchse eine gekrümmte Kontur aufweist und sich im Inneren eines gegenüber des Buchsenkörpers nach außen vorstehenden Ringwulstes befindet. Ein Ringwulst kann durch einen einfachen Stauchvorgang hergestellt werden, ohne daß aufwendige Innenfräswerkzeuge benötigt werden. Der Stauchvorgang ist schnell und kostengünstig durchführbar, wodurch die Kosten für die gesamte Lagerbuchse deutlich gesenkt werden können.

Die Lagerbuchse kann beispielsweise einen Trägerkörper aus Stahl aufweisen, auf dem eine Lagerlegierung aufgebracht ist. Die Wandstärke der Lagerbuchse ist überall, d.h. auch im Bereich des Ringwulstes gleich groß. Es handelt sich vorzugsweise um Lagerbuchsen, die für Drehbewegungen eingesetzt werden.

Ringwulste haben weiterhin den Vorteil, daß die Innenkontur nicht rechteckig sondern gekrümmt, insbesondere kreisförmig ist, so daß herkömmliche Dichtelemente, wie z.B. O-Ringe, Verwendung finden können. Die Gesamtkomponente Lagerbuchse mit Dichtung ist dadurch auf einfache Weise herstellbar.

Die dem Ringwulst benachbarte Stirnfläche der Buchse bildet mit der Buchsenachse vorzugsweise einen Winkel α zwischen 10° und 80°. Eine Neigung der Stirnfläche mit einem Winkel < 10° würde einen verhältnismäßig großen Aufwand bei der Herstellung bedingen. Die Nut im Ringwulst muß lediglich so ausgebildet sein, daß das Dichtelement gehalten wird. Bei einem Winkel α > 80° könnte das Dichtelement aus der Buchse herausfallen. Daher ist der Winkelbereich von 10 bis 80° für eine solche Buchse besonders geeignet.

Das Verfahren zur Herstellung einer solchen Lagerbuchse ist Gegenstand des Patentanspruchs 5. Das erfindungsgemäße Verfahren sieht vor, daß das zum Ringwulst umzuformende Buchsenende parallel aufgeweitet wird, daß der aufgeweitete Buchsenabschnitt an seinem Ende nach innen umgeformt wird, so daß die Stirnfläche mit der Längsachse der Buchse einen Winkel α zwischen 10° und 80° bildet, und daß unter Beibehaltung der Ausrichtung der Stirnfläche die Buchse zur Ausbildung des Ringwulstes gestaucht wird.

Beispielhafte Ausführungsformen werden nachfolgend anhand der Zeichnungen näher erläutert.

Es zeigen:
- Figur 1: eine perspektivische Darstellung einer Buchse mit einem Wulst am vorderen Ende,
- Figur 2: einen Schnitt durch die in der Figur 1 gezeigte Buchse längs der Linie II-II,
- Figuren 3a bis d: eine schematische Darstellung des Umformvorgangs anhand einer im Vertikalschnitt dargestellten Umformvorrichtung.

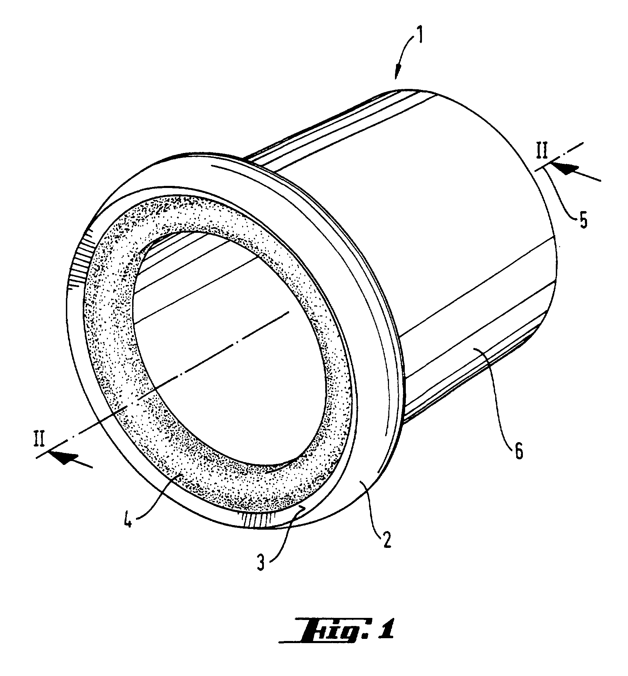

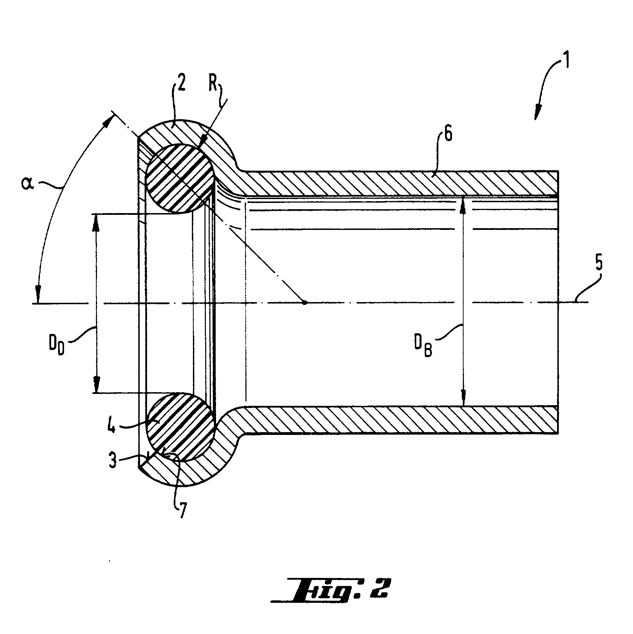

In der Figur 1 ist eine Buchse 1 dargestellt, die einen zylinderförmigen Buchsenkörper 6 aufweist, an dessen vorderen Ende ein Ringwulst 2 angeformt ist, der gegenüber dem Buchsenkörper 6 nach außen vorsteht. Die Buchse 1 besitzt überall dieselbe Wandstärke. Die Stirnfläche 3 ist zur Längsachse 5 geneigt, was aus der Figur 2 deutlicher zu entnehmen ist. Im Inneren des Wulstes 2 ist eine Nut 7 ausgebildet, in der ein O-Ring 4 als Dichtelement eingelegt ist.

In der Figur 2 ist der Schnitt durch die in der Figur 1 gezeigte Buchse dargestellt. Der Wulst 2 besitzt eine kreisförmige Außenkontur und daher entsprechend eine kreisförmige Innenkontur, die die Nut 7 bildet, in der ein O-Ring 4 angeordnet ist. Die Stirnfläche 3 der Buchse 1 bildet mit der Längsachse 5 einen Winkel α, der in der hier gezeigten Ausführungsform 45° beträgt. Diese geneigte Stirnfläche 3 hat den Vorteil, daß der O-Ring auf einfache Weise eingesetzt werden kann. Der O-Ring besitzt einen Querschnitt, der an die Krümmung der Nut 7 angepaßt ist, so daß das Dichtelement dicht an der Innenseite des Wulstes 2 anliegt. Der eingezeichnete Radius R kennzeichnet die Krümmung der Nut 7 und ist identisch mit dem Radius des Dichtelementes. Die Ausbildung des Wulstes 2 wurde so gewählt, daß unter Berücksichtigung des Radius R der O-Ring 4 einen geringeren Innendurchmesser D_{D} aufweist als der Innendurchmesser D_{B} des Buchsenkörpers 6, so daß bei Einführen einer Lagerwelle oder dergleichen der O-Ring 4 zusammengepreßt wird und somit seine Dichtwirkung entfalten kann.

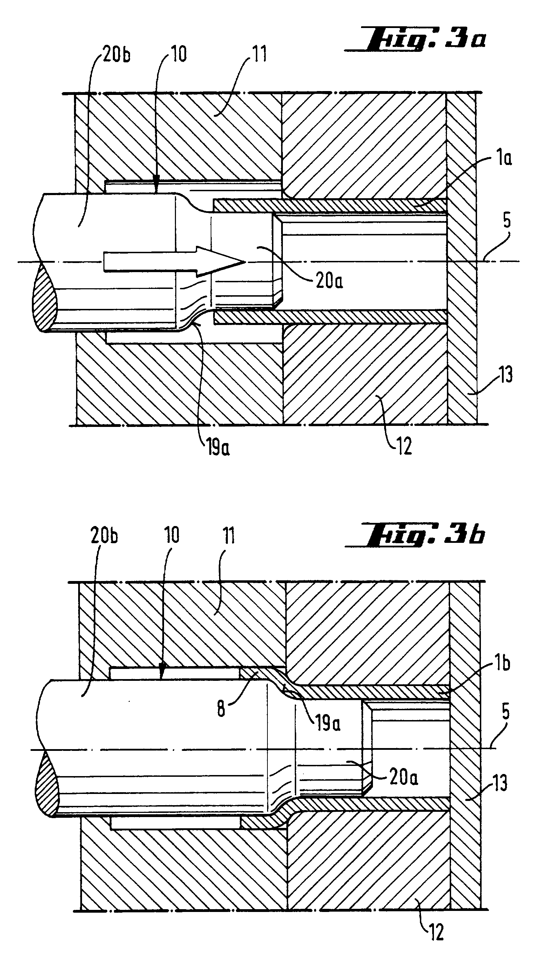

In der Figur 3a wird der Beginn des Umformprozesses schematisch anhand einer entsprechenden Vorrichtung gezeigt. Eine herkömmliche zylinderförmige Buchse 1a befindet sich in einer ersten, vorderen Matritze 12 und stützt sich mit seiner rechten Stirnfläche an einer Widerlagerplatte 13 ab. Die Buchse 1a steht gegenüber der Matritze 12 vor und ragt in eine erste hintere Matritze 11, in der ein Dorn 10 in Richtung der Längsachse der Buchse 5 beweglich angeordnet ist. Der Dorn 10 besitzt zwei Abschnitte 20a, b mit unterschiedlichen Durchmessern, zwischen denen ein Übergangs- oder Aufweitungsabschnitt 19a angeordnet ist. Der Dom 10 wird mit seinem vorderen Abschnitt 20a in die Buchse 1a eingeführt bis der Aufweitungsabschnitt 19a an der Stirnseite der Buchse anstößt. In diesem Bereich vergrößert sich der Durchmesser des Doms 10 und die Buchse 1a wird bei weiterem Eindringen des Doms 10 aufgeweitet, so wie dies in der Figur 3b dargestellt ist. Damit die Buchse 1a nach außen nicht unkontrolliert ausweichen kann, ist die erste vordere Matritze 11 als Begrenzung ausgebildet. Der Abstand der Innenwand der Matritze 11 zum Abschnitt 20b des Dorns 10 ist auf die Lagerwanddicke der Buchse 1a abgestimmt. Man erhält, wie in der Figur 3b zu sehen ist, einen aufgeweiteten, ebenfalls zylindrischen Abschnitt 8.

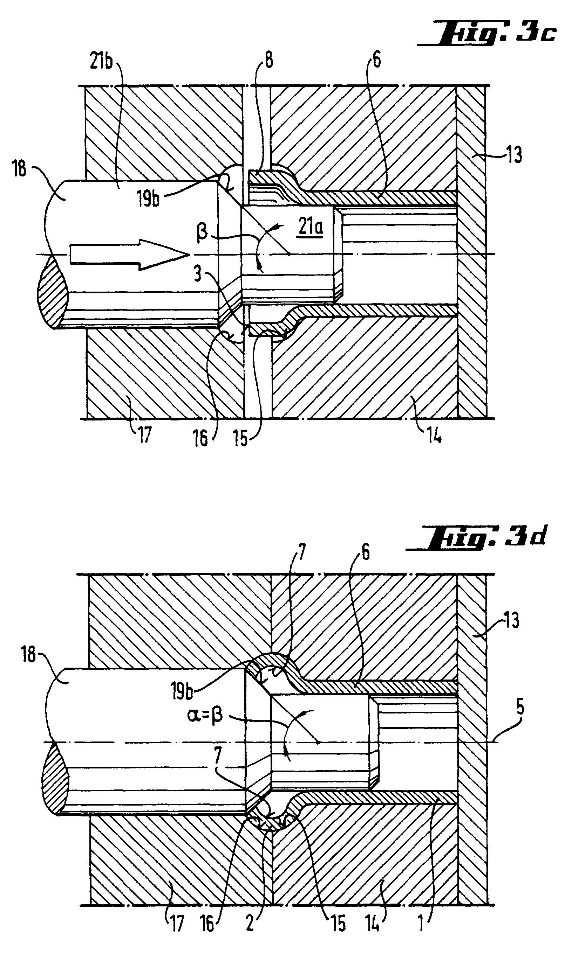

Nach diesem ersten Umformvorgang, werden sowohl der Dorn 10 als auch die Matritzen 11 und 12 ausgetauscht. An deren Stelle treten gemäß Fig. 3c eine zweite vordere und eine zweite hintere Matritze 14 und 17, die kugelschichtförmige gegenüberliegende Formflächen 15 und 16 aufweisen. Es wird ein Dorn 18 verwendet, der zwei Abschnitte 21a, b mit unterschiedlichen Durchmessern sowie im Übergangsbereich eine konische Fläche 19b aufweist. Dieser Dorn wird ebenfalls in die Buchse 1b eingeführt, wobei die zweite vordere Matritze 17 zusammen mit dem Dorn 18 in Pfeilrichtung bewegt wird. Zu Beginn des zweiten Umformschrittes stößt der aufgeweitete Abschnitt 8 mit seiner Stirnfläche 3 zunächst an die Formfläche 16, die das vordere Ende des aufgeweiteten Abschnittes 8 nach innen lenkt, bis die Stirnfläche 3 flächig an der konischen Fläche 19b anliegt. Die Neigung der konischen Fläche 19b ist durch den Winkel β gekennzeichnet, der die Ausrichtung der Stirnfläche 3 definiert. Beim weiteren Formvorgang liegt die Stirnfläche 3 an dieser konischen Fläche 19b an, so daß nunmehr die Kräfte über diese Fläche 19b in den aufgeweiteten Abschnitt 8 eingeleitet werden können. Der nachfolgende Stauchvorgang zwingt den aufgeweiteten Abschnitt 8 zur Anlage an die Formflächen 15 und 16, so daß sich der Wulst 2 ausbildet, wie dies in der Figur 3d gezeigt ist. Anschließend werden die Matritzen 14 und 17 entfernt und der Dorn 18 aus der Buchse herausgezogen. In die Nut 7 der auf diese Weise hergestellten Buchse 1 kann dann das Dichtelement, z.B. in Form eines O-Ringes, eingelegt werden.

### Bezugszeichen:

- 1: Buchse
- 2: Ringwulst
- 3: Stirnfläche
- 4: O-Ring
- 5: Längsachse
- 6: Buchsenkörper
- 7: Nut
- 8: aufgeweiteter Buchsenabschnitt
- 10: erster Dorn
- 11: erste hintere Matritze
- 12: erste vordere Matritze
- 13: Widerlagerplatte
- 14: zweite vordere Matritze
- 15: Formfläche
- 16: Formfläche
- 17: zweite hintere Matritze
- 18: zweiter Dorn
- 19a: Aufweitungsfläche
- 19b: konische Fläche
- 20a, b: Dornabschnitt
- 21a, b: Abschnitt

## Patentansprüche

1. Lagerbuchse mit mindestens einer innenliegenden Ringnut an mindestens einem Buchsenende zur Aufnahme eines Dichtringes, **dadurch gekennzeichnet,**
**daß** die Nut (7) in Axialrichtung der Buchse eine gekrümmte Kontur aufweist und sich im Inneren eines gegenüber des Buchsenkörpers (6) nach außen vorstehenden Ringwulstes (2) befindet.

2. Lagerbuchse nach Anspruch 1, **dadurch gekennzeichnet, daß** die Nut (7) eine kreisförmige Kontur aufweist.

3. Lagerbuchse nach Anspruch 1 oder 2, **dadurch gekennzeichnet, daß** die dem Ringwulst (2) benachbarte Stirnfläche (3) der Buchse (1) mit der Buchsenachse (5) einen Winkel α zwischen 10° und 80° bildet.

4. Lagerbuchse nach einem der Ansprüche 1 bis 3, **dadurch gekennzeichnet, daß** in der Nut (7) ein O-Ring (4) angeordnet ist.

5. Verfahren zur Herstellung einer Lagerbuchse nach Patentanspruch 1, **dadurch gekennzeichnet,**
**daß** das zum Ringwulst umzuformende Buchsenende parallel aufgeweitet wird,
**daß** der aufgeweitete Buchsenabschnitt an seinem Ende nach innen umgeformt wird, so daß die Stirnfläche mit der Längsachse der Buchse einen Winkel α zwischen 10 und 80° bildet, und
**daß** unter Beibehaltung der Ausrichtung der Stirnfläche die Buchse zur Ausbildung des Ringwulstes gestaucht wird.

## Claims

1. Bearing bush having at least one inner annular groove at at least one bush end for receiving a sealing ring, **characterized in that** the groove (7) has a curved contour in the axial direction of the bush and is present in the interior of an annular bead (2) projecting outwards relative to the bush body (6).

2. Bearing bush according to Claim 1, **characterized in that** the groove (7) has a circular contour.

3. Bearing bush according to Claim 1 or 2, **characterized in that** that end face (3) of the bush (1) which is adjacent to the annular bead (2) makes an angle α of between 10° and 80° with the bush axis (5).

4. Bearing bush according to any of Claims 1 to 3, **characterized in that** an O-ring (4) is arranged in the groove (7).

5. Method for the production of a bearing bush according to Patent Claim 1, **characterized in**
**that** the bush end to be shaped into the annular bead is expanded in a parallel manner,
**that** the expanded bush section is shaped inwards at its end so that the end face makes an angle α of between 10 and 80° with the longitudinal axis of the bush, and
**that** the bush is compressed for the formation of the annular bead while retaining the orientation of the end face.

## Revendications

1. Coussinet muni d'au moins une saignée annulaire intérieure à au moins une extrémité, en vue de recevoir une bague d'étanchement,
**caractérisé par le fait**
**que** ladite saignée (7) présente un profil courbe dans la direction axiale du coussinet, et se trouve à l'intérieur d'un bourrelet annulaire (2) saillant vers l'extérieur vis-à-vis du corps (6) dudit coussinet.

2. Coussinet selon la revendication 1, **caractérisé par le fait que** la saignée (7) présente un profil circulaire.

3. Coussinet selon la revendication 1 ou 2, **caractérisé par le fait que** la face extrême (3) dudit coussinet (1), voisine du bourrelet annulaire (2), décrit un angle α de 10° à 80° avec l'axe (5) dudit coussinet.

4. Coussinet selon l'une des revendications 1 à 3, **caractérisé par le fait qu'**une bague torique (4) est logée dans la saignée (7).

5. Procédé de fabrication d'un coussinet selon la revendication 1,
**caractérisé par le fait**
**que** l'extrémité dudit coussinet, devant être amenée à la forme du bourrelet annulaire, comporte un évasement parallèle ;
**que** le segment évasé du coussinet est déformé vers l'intérieur à son extrémité, de façon telle que la face extrême forme un angle α de 10 à 80° avec l'axe longitudinal dudit coussinet ; et
**que** ledit coussinet est refoulé pour ménager le bourrelet annulaire, avec conservation de l'orientation de la face extrême.
